# EUROPÄISCHE PATENTSCHRIFT

(11) **EP 4 568 858 B1**
(45) Veröffentlichungstag und Bekanntmachung des Hinweises auf die Patenterteilung: **22.07.2026**
(21) Anmeldenummer: 23748049.6
(22) Anmeldetag: 25.07.2023
(51) Int. Cl.: B60T 8/36

(54) **VERFAHREN ZUR FUNKTIONSÜBERPRÜFUNG EINES ABS-REGELVENTILS**
METHOD FOR CHECKING THE FUNCTION OF AN ABS CONTROL VALVE
PROCÉDÉ DE VÉRIFICATION DU FONCTIONNEMENT D'UNE VALVE DE COMMANDE ABS

(30) Priorität: 12.08.2022 DE 102022120427
(43) Veröffentlichungstag der Anmeldung: 18.06.2025
(73) Patentinhaber: ZF CV Systems Europe BV, 1170 Brüssel (BE)
(72) Erfinder: PRACHT, Joachim, 30629 Hannover (DE)
(74) Vertreter: Schäferjohann, Volker
(86) Internationale Anmeldenummer: PCT/EP2023/070533
(87) Internationale Veröffentlichungsnummer: WO 2024/033072

(56) Entgegenhaltungen:
- EP-A2- 0 154 214
- DE-A1- 102015 016 264

## Beschreibung

Die Erfindung betrifft ein Verfahren zur Funktionsüberprüfung eines ABS-Regelventils, welches einen Bremsdruckeingang, einen Bremsdruckausgang, einen Entlüftungsausgang, ein druckgesteuertes Einlassventil und ein druckgesteuertes Auslassventil aufweist, wobei dem Einlassventil und dem Auslassventil jeweils ein 3/2-Wege-Magnetventil als Vorsteuerventil zugeordnet ist, mittels deren Bestromung das Einlassventil geschlossen und das Auslassventil geöffnet werden kann, wobei das ABS-Regelventil in einer Radbremsleitung einer elektropneumatischen Bremsanlage eines Fahrzeugs zwischen einem Achsmodulatorventil und mindestens einem Radbremszylinder angeordnet ist, und bei dem mittels einer Testfunktion die pneumatische Schaltfunktionsfähigkeit des ABS-Regelventils überprüft werden kann.

Die Nutzung des erfindungsgemäßen Verfahrens setzt demnach eine an sich bekannte elektropneumatische Bremsanlage eines Fahrzeugs voraus, bei der die Radbremsen der Fahrzeugachsen unterschiedlichen Bremskreisen zugeordnet sind. Hierbei werden die Bremsdrücke für die Radbremszylinder der Vorderachse und der mindestens einen Hinterachse über jeweils ein Achsmodulatorventil in Abhängigkeit eines sensorisch erfassten oder in einem Steuerungsprogramm in Abhängigkeit von Betriebsparametern des Fahrzeugs berechneten Bremswertes in die zu den Radbremszylindern führenden Radbremsleitungen eingesteuert. Der eingesteuerte Bremsdruck wird jeweils mittels eines Drucksensors erfasst, welcher innen oder außen an dem jeweiligen Achsmodulatorventil angeordnet sein kann. In den Radbremsleitungen ist zwischen den Achsmodulatorventilen und den Radbremszylindern oder unmittelbar an den Achsmodulatorventilen jeweils ein ABS-Regelventil angeordnet, mittels dem der Bremsdruck jedes Radbremszylinders bedarfsweise, insbesondere bei Vorliegen eines Blockierens oder einer Blockierneigung des zugeordneten Rades, abgesenkt werden kann.

Eine derartige elektropneumatische Bremsanlage ist beispielsweise aus der DE 10 2017 007 788 A1 bekannt. Bei dieser Bremsanlage sind die ABS-Regelventile der Vorderachse jeweils in den Radbremsleitungen zwischen dem Achsmodulatorventil und dem betreffenden Radbremszylinder angeordnet, wogegen die ABS-Regelventile der Hinterachse jeweils unmittelbar an dem Achsmodulatorventil angeordnet beziehungsweise in dieses integriert sind. In der DE 2017 007 788 A1 sind anhand der dortigen Fig. 3 auch der Aufbau und die Funktionsweise des Achsmodulatorventils der Vorderachse erläutert.

EP 0 154 214 A2 offenbart eine Steuerventileinrichtung, insbesondere für Blockierschutzanlagen mit in einem Ventilgehäuse angeordneten Ein- und Auslaßventil, die jeweils einerseits von einem gehäusefesten Ein- bzw. Auslaßventilsitz und andererseits von einer gegenüber dem Ventilsitz im Ventilgehäuse fest eingespannten und in Ventilsitzrichtung jeweils von einer Feder beaufschlagten Ein- bzw. Auslaßventilmembran gebildet sind.

DE 10 2015 016264 A1 betrifft eine Ventileinheit zur Druckmodulation in einer DruckluftBremsanlage, mit einem Einlassventil und einem Auslassventil, die als Membranventile ausgebildet sind, und über die ein Bremsdruckausgang mit einem Bremsdruckeingang oder einem Entlüftungsausgang verbindbar oder gegenüber diesem absperrbar ist.

Die ABS-Regelventile weisen üblicherweise ein Einlassventil und ein Auslassventil auf, um die Schaltfunktionen "Bremsdruck erhöhen", "Bremsdruck halten" und "Bremsdruck absenken" realisieren zu können. Während die ABS-Regelventile in den Bremsanlagen von Personenwagen und leichten Nutzfahrzeugen üblicherweise als direkt gesteuerte Magnetventile ausgebildet sind, kommen in den Bremsanlagen von schweren Nutzfahrzeugen, wie Lastkraftwagen und Bussen, aufgrund der dort verbauten großvolumigen Radbremszylinder bevorzugt vorgesteuerte Einlassventile und vorgesteuerte Auslassventile zur Anwendung, welche als druckgesteuerte, jeweils von einem Magnetventil ansteuerbare Membranventile oder Kolbenventile ausgebildet sind.

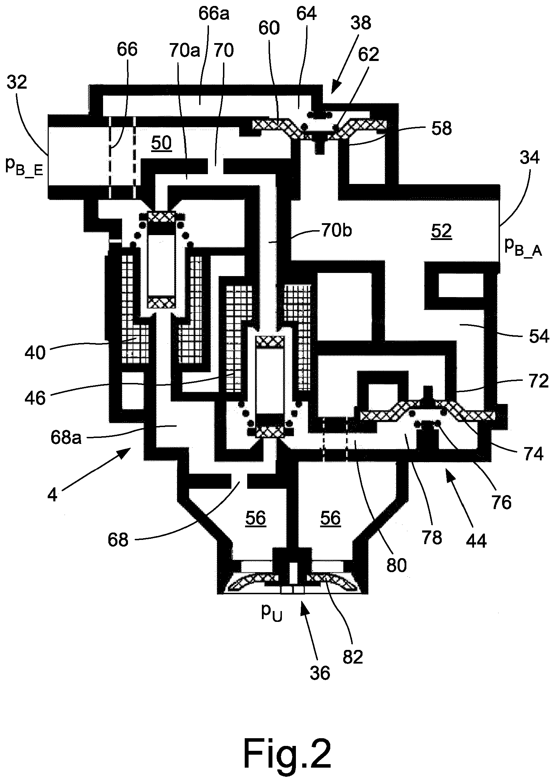

Ein typisches ABS-Regelventil mit vorgesteuerten, als Membranventile ausgebildeten Einlassventilen und Auslassventilen ist beispielsweise in der DE 10 2019 131 128 A1 offenbart, in welcher der Aufbau und die Funktionsweise des ABS-Regelventils anhand der dortigen Fig. 2 erläutert sind.

Während die Achsmodulatorventile üblicherweise nahe der jeweils zugeordneten Fahrzeugachse mittig am Fahrzeugrahmen befestigt sind, werden die ABS-Regelventile, sofern sie nicht in das betreffende Achsmodulatorventil integriert oder an dieses angeflanscht sind, nahe zu dem Radbremszylinder in oder an dem jeweiligen Radhaus angeordnet. Hierdurch sind für die ABS-Regelung kurze Strömungswege der einströmenden sowie ausströmenden Druckluft und somit ein schnelles Ansprechverhalten der Radbremsen zu erreichen. Da die ABS-Regelventile bei dieser Anordnung jedoch stark äußeren Einflüssen, wie aufgewirbeltem Schmutz und Spritzwasser, ausgesetzt sind, besteht die Gefahr, dass insbesondere bei beschädigter oder versprödeter, also nicht mehr federelastischer Membrandichtung am Entlüftungsausgang Schmutzpartikel sowie Feuchtigkeit von außen in das Gehäuse eines ABS-Regelventils eindringen und insbesondere durch Korrosionserscheinungen zur Verstopfung von Steuerkanälen führen. Es ist jedoch auch möglich, dass Schmutzpartikel und Feuchtigkeit mit der über das jeweilige Achsmodulatorventil aus einer Druckluftaufbereitungsanlage zugeführten Druckluft in ein ABS-Regelventil eingetragen werden. Zur Gewährleistung der Fahrsicherheit des betreffenden Fahrzeugs besteht daher ein Bedarf daran, die pneumatische Schaltfunktionsfähigkeit der ABS-Regelventile in deren eingebautem Zustand zu überprüfen.

Aus der DE 10 2008 022 953 A1 ist ein Verfahren zur Überwachung eines Magnetventils einer elektrischen Feststellbremse bekannt, bei dem der elektrische Stromverlauf oder Spannungsverlauf an der Magnetspule des Magnetventils während dessen Umschaltung gemessen und danach beurteilt wird. Bei einem funktionstüchtigen Magnetventil weist der bei der Umschaltung des Magnetventils ansteigende Strom- oder Spannungsverlauf einen Einbruch auf, welcher durch die Selbstinduktion bei der Verschiebung des Ventilkolbens verursacht wird, jedoch bei nicht bewegtem Ventilkolben nicht auftritt. Durch dieses bekannte Verfahren kann jedoch nur die elektromechanische Schaltfunktionsfähigkeit des Magnetventils überprüft werden.

In der DE 10 2016 101 700 A1 ist dagegen ein Verfahren zur Überwachung eines Magnetventils beschrieben, bei dem ein Testsignal an einer Seite der Magnetspule angelegt sowie ein Messsignal an der anderen Seite der Magnetspule abgegriffen wird, und bei dem der Zustand des Magnetventils anhand eines Vergleichs des Messsignals mit dem Testsignal beurteilt wird. In einer dort bevorzugten Ausführung des Verfahrens besteht das Testsignal aus einer bestimmten Anzahl von Spannungsimpulsen. Die Beurteilung des Zustands des Magnetventils erfolgt anhand eines Vergleiches der Anzahl der Spannungsimpulse des Messsignals und derjenigen des Testsignals. Mittels dieses bekannten Verfahrens kann jedoch nur die elektrische Funktionsfähigkeit des Magnetventils überprüft werden.

Der Erfindung liegt die Aufgabe zugrunde, ein Verfahren zur Funktionsüberprüfung eines ABS-Regelventils der eingangs genannten Bauart und Anordnung anzugeben, mittels dem die pneumatische Schaltfunktionsfähigkeit des ABS-Regelventils überprüft werden kann.

Die Lösung der verfahrensbezogenen Aufgabe wird mit einem Verfahren erreicht, welches die Merkmale des Anspruchs 1 aufweist. Zugeordnete abhängige Verfahrensansprüche geben vorteilhafte Weiterbildungen an.

Demnach betrifft die Erfindung zunächst ein Verfahren zur Funktionsüberprüfung eines ABS-Regelventils,
welches einen Bremsdruckeingang, einen Bremsdruckausgang, einen Entlüftungsausgang, ein druckgesteuertes Einlassventil und ein druckgesteuertes Auslassventil aufweist, wobei dem Einlassventil und dem Auslassventil jeweils ein 3/2-Wege-Magnetventil als Vorsteuerventil zugeordnet ist,
mittels deren Bestromung das Einlassventil geschlossen und das Auslassventil geöffnet werden kann,
wobei das ABS-Regelventil in einer Radbremsleitung einer elektropneumatischen Bremsanlage eines Fahrzeugs zwischen einem Achsmodulatorventil und mindestens einem Radbremszylinder angeordnet ist,
und bei dem mittels einer Testfunktion die pneumatische Schaltfunktionsfähigkeit des ABS-Regelventils überprüft wird.

Zur Lösung der gestellten Aufgabe ist bei diesem Verfahren vorgesehen,
dass mittels des Achsmodulatorventils ein Bremsdruck p_{B_E} in die Radbremsleitung eingesteuert wird,
dass nachfolgend der zeitliche Bremsdruckverlauf p_{B_E}(t) in einem eingangsseitigen Abschnitt der Radbremsleitung mittels eines Drucksensors gemessen sowie die Messwerte dieses Bremsdruckverlaufs in einer elektronischen Bremssteuereinheit abgespeichert werden,
dass durch Einschalten oder Abschalten mindestens eines der Vorsteuerventile des ABS-Regelventils während der Messung des Bremsdruckverlaufes p_{B_E}(t) mindestens eine Umschaltung des Einlassventils oder des Auslassventils veranlasst wird,
und dass abschließend anhand des Bremsdruckverlaufes p_{B_E}(t) beurteilt wird, ob ein Eingangs-Steuerkanal oder ein Ausgangs-Steuerkanal,
welche die beiden Vorsteuerventile miteinander verbinden, offen oder verschlossen ist.

Durch das Einschalten, also Bestromen, oder Abschalten mindestens eines der beiden Vorsteuerventile des ABS-Regelventils während der Messung des Bremsdruckverlaufes wird eine Umschaltung des Einlassventils oder des Auslassventils veranlasst, welche jedoch nur bei offenem Eingangs-Steuerkanal oder offenem Ausgangs-Steuerkanal tatsächlich erfolgt. Ebenso wird das Einlassventil oder das Auslassventil geschlossen gehalten, welches auch nur bei offenem Eingangs-Steuerkanal oder offenem Ausgangs-Steuerkanal stattfindet. Daher kann anhand des Bremsdruckverlaufes beurteilt werden, ob der Eingangs-Steuerkanal oder der Ausgangs-Steuerkanal, welche die beiden Vorsteuerventile pneumatisch miteinander verbinden, offen oder verschlossen ist.

Gemäß einer Ausführungsform des Verfahrens ist vorgesehen, dass nach dem Einsteuern des Bremsdruckes p_{B_E} in die Radbremsleitung in einem ersten Teil der Testfunktion das Einlassventil durch Einschalten des zugeordneten ersten Vorsteuerventils geschlossen wird, und dass der Eingangs-Steuerkanal als offen beurteilt wird, wenn der Bremsdruck p_{B_E} konstant geblieben ist, sowie als verschlossen beurteilt wird, wenn der Bremsdruck p_{B_E} abgesunken ist.

Bei verschlossenem Eingangs-Steuerkanal gelangt der eingesteuerte Bremsdruck nicht oder nur stark verzögert und gedrosselt in die Steuerkammern des Einlassventils und des Auslassventils, sodass das Einlassventil geöffnet bleibt und das Auslassventil geöffnet wird, welches zum Absinken des Bremsdruckes in der Radbremsleitung führt.

In Weiterführung des Verfahrens, welche nur dann erfolgt, wenn im ersten Teil der Testfunktion ein offener Eingangs-Steuerkanal festgestellt wurde, ist in einem unmittelbar anschließenden zweiten Teil der Testfunktion vorgesehen, dass dann, wenn im ersten Teil der Testfunktion ein offener Eingangs-Steuerkanal festgestellt wurde, unmittelbar danach ein zweiter Teil der Testfunktion ausgeführt wird, welcher vorsieht, dass das Auslassventil durch kurzzeitiges Einschalten des zugeordneten zweiten Vorsteuerventils impulsartig geöffnet wird, dass daraufhin das Einlassventil durch kurzzeitiges Abschalten des zugeordneten ersten Vorsteuerventils impulsartig geöffnet wird, und dass der Ausgangs-Steuerkanal als offen beurteilt wird, wenn der Bremsdruck p_{B_E} abgesunken ist, und als verschlossen beurteilt wird, wenn der Bremsdruck p_{B_E} konstant gehalten wurde.

Bei verschlossenem Ausgangs-Steuerkanal gelangt der Umgebungsdruck während der Öffnungsimpulse nicht oder nur stark verzögert in die Steuerkammern des Einlassventils und des Auslassventils, sodass beide Ventile geschlossen bleiben, welches zum Halten des Bremsdruckes im eingangsseitigen Abschnitt der Radbremsleitung führt.

Üblicherweise sind an jedes Achsmodulatorventil zwei Radbremsleitungen mit jeweils einem ABS-Regelventil angeschlossen, also eine Radbremsleitung mit einem ABS-Regelventil pro Fahrzeugseite. Daher ist zur eindeutigen Zuordnung der Ergebnisse der Testfunktion gemäß einer anderen vorteilhaften Weiterbildung des Verfahrens vorgesehen, dass die Testfunktion bei mehreren über jeweils eine Radbremsleitung an das Achsmodulatorventil angeschlossenen ABS-Regelventilen in einer festgelegten Reihenfolge für jedes der ABS-Regelventile separat ausgeführt wird.

Zur Gewährleistung der Fahrsicherheit des Fahrzeugs kann weiter mit Vorteil vorgesehen sein, dass vor der Durchführung der Testfunktion der aktuelle Betriebszustand des Fahrzeugs ermittelt wird, und dass die Testfunktion nur dann ausgeführt wird, wenn sich das Fahrzeug in einem für die Fahrsicherheit ungefährlichen Betriebszustand befindet.

Dies kann beispielsweise derart erfolgen, dass vor der Durchführung der Testfunktion die aktuelle Fahrgeschwindigkeit v_{F} und der aktuelle Betriebszustand der Parkbremse sensorisch ermittelt werden, und dass die Testfunktion nur dann ausgeführt wird, wenn das Fahrzeug stillsteht (v_{F} = 0) und die Parkbremse betätigt ist.

Auch sollte während der Ausführung der Testfunktion keine Betätigung des Bremspedals oder eine Bremsanforderung eines Steuerungsprogramms vorliegen, da dies die Erkennung verschlossener Steuerkanäle der ABS-Regelventile verhindert oder zumindest erschwert. Daher ist vorgesehen, dass vor der Ausführung der Testfunktion der aktuelle Betriebszustand der Betriebsbremsanlage sensorisch ermittelt wird, und dass die Testfunktion nur dann ausgeführt wird, wenn die Betriebsbremsanlage unbetätigt ist.

Die Testfunktion wird gemäß einer anderen Weiterbildung des Verfahrens vorzugsweise bei jeder Inbetriebnahme des Fahrzeugs ausgeführt.

Zusätzlich kann jedoch auch vorgesehen sein, dass die Testfunktion bei jeder Fahrtunterbrechung ausgeführt wird, welche nach Ablauf einer vorab festgelegten Fahrstrecke oder Fahrzeit des Fahrzeugs seit der letzten Ausführung der Testfunktion eintritt.

Zur Information des Fahrers wird nach der Ausführung der Testfunktion vorteilhaft ein akustisches und/oder optisches Signal im Bereich des Fahrerplatzes ausgegeben, mit dem das Ende der Testfunktion angezeigt wird. Außerdem kann das Ergebnis der Testfunktion hierzu in einem Display eines Infotainmentsystems angezeigt werden.

Zudem sollte ein akustisches und/oder optisches Warnsignal im Bereich des Fahrerplatzes ausgegeben werden, wenn im ersten Teil der Testfunktion ein verschlossener Eingangs-Steuerkanal oder im zweiten Teil der Testfunktion ein verschlossener Ausgangs-Steuerkanal des ABS-Regelventils festgestellt wurde.

Vorteilhaft kann auch vorgesehen sein, dass in einem Fehlerspeicher einer Bremssteuereinheit eine Fehlermeldung abgespeichert und im Display des Infotainmentsystems eine Aufforderung zum Anfahren einer Werkstatt angezeigt wird, wenn im ersten Teil der Testfunktion ein verschlossener Eingangs-Steuerkanal des ABS-Regelventils oder im zweiten Teil der Testfunktion ein verschlossener Ausgangs-Steuerkanal des ABS-Regelventils festgestellt wurde.

Die Erfindung wird nachstehend anhand eines in der beigefügten Zeichnung dargestellten Ausführungsbeispiels näher erläutert. In der Zeichnung zeigt
Fig. 1 einen Abschnitt einer elektropneumatischen Bremsanlage mit einem Achsmodulatorventil, einem ABS-Regelventil, einem Radbremszylinder und einer elektronischen Bremssteuereinheit in einer schematischen Abbildung.
Fig. 2 ein das ABS-Regelventil gemäß Fig. 1 in einer vergrößerten Darstellung.

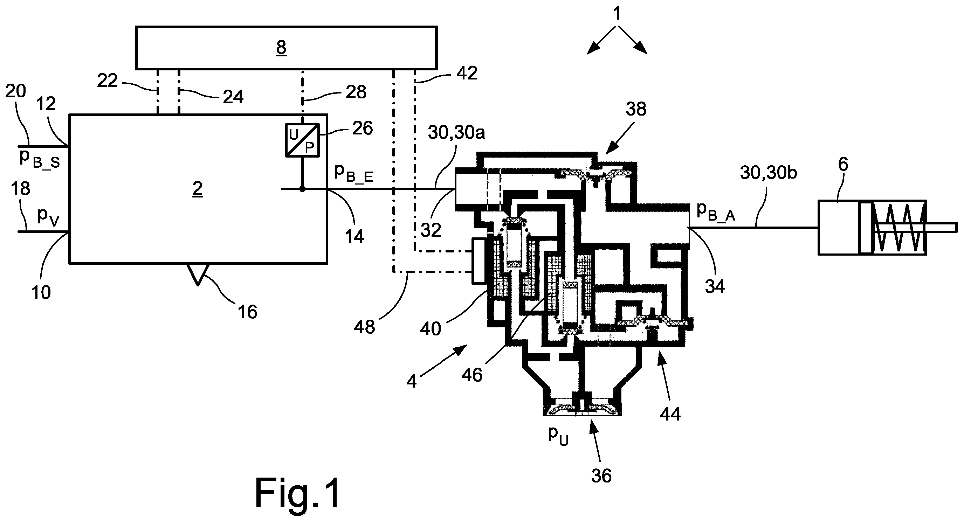

Der in Fig. 1 abgebildete Ausschnitt aus einer elektropneumatischen Bremsanlage 1 eines Fahrzeugs umfasst ein Achsmodulatorventil 2, das einer Fahrzeugachse zugeordnet ist, ein ABS-Regelventil 4, welches einem Fahrzeugrad dieser Fahrzeugachse zugeordnet ist, einen Radbremszylinder 6 und eine elektronische Bremssteuereinheit 8.

Das vereinfacht dargestellte Achsmodulatorventil 2 weist einen Vorratseingang 10, einen Bremssteuereingang 12, einen Bremsdruckausgang 14 und einen Entlüftungsausgang 16 auf. An den Vorratsdruckeingang 10 ist eine Vorratsleitung 18 angeschlossen, in der ein pneumatischer Vorratsdruck p_{V} herrscht. An den Bremssteuereingang 12 ist eine Bremssteuerleitung 20 angeschlossen, in der bei betätigter Betriebsbremsanlage 1 des Fahrzeugs ein Bremssteuerdruck p_{B_S} anliegt.

Das Achsmodulatorventil 2 umfasst mindestens zwei in Fig. 1 nicht dargestellte Magnetventile, welche jeweils über eine elektrische Steuerleitung 22, 24 an die Bremssteuereinheit 8 angeschlossen sind. Bei den Magnetventilen kann es sich um direkt gesteuerte Einlassventile und Auslassventile oder um Vorsteuerventile der Einlassventile und Auslassventile handeln. Über das Achsmodulatorventil 2 wird im Normalbetrieb in Abhängigkeit eines elektronischen Bremswertes und im Redundanzfall, also bei ausgefallener elektronischer Steuerung, in Abhängigkeit des Bremssteuerdruckes p_{B_S} ein Bremsdruck p_{B_E} ausgesteuert, welcher an dem Bremsdruckausgang 14 anliegt. Dieser Bremsdruck p_{B_E} wird mittels eines vorliegend beispielhaft innerhalb des Achsmodulatorventils 2 angeordneten Drucksensors 26 erfasst, welcher über eine elektrische Sensorleitung 28 mit der Bremssteuereinheit 8 verbunden ist.

An den Bremsdruckausgang 14 des Achsmodulatorventils 2 ist eine Radbremsleitung 30 angeschlossen, welche an den Radbremszylinder 6 der betreffenden Fahrzeugachse führt. Das ABS-Regelventil 4 ist zwischen dem Achsmodulatorventil 2 und dem Radbremszylinder 6 in der Radbremsleitung 30 angeordnet. Das ABS-Regelventil 4 weist einen Bremsdruckeingang 32, einen Bremsdruckausgang 34 und einen Entlüftungsausgang 36 auf. An dem Bremsdruckeingang 32, welcher über einen eingangsseitigen Abschnitt 30a der Radbremsleitung 30 mit dem Bremsdruckausgang 14 des Achsmodulatorventils 2 verbunden ist, liegt der Bremsdruck p_{B_E} an, welcher bezogen auf das ABS-Regelventil 4 hier als Eingangsbremsdruck bezeichnet wird. An dem Bremsdruckausgang 34, welcher über einen ausgangsseitigen Abschnitt 30b der Radbremsleitung 30 mit dem Radbremszylinder 6 verbunden ist, liegt ein Ausgangsbremsdruck p_{B_A}, an, welcher abhängig vom Betriebszustand des ABS-Regelventils 4 von dem Eingangsbremsdruck p_{B_E} abweichen kann. Das ABS-Regelventil 4 weist ein druckgesteuertes Einlassventil 38 und ein druckgesteuertes Auslassventil 44 auf, denen jeweils ein erstes Vorsteuerventil 40 beziehungsweise ein zweites Vorsteuerventil 46 zugeordnet ist. Diese beiden Vorsteuerventile 40, 46 sind 3/2-Wege-Magnetventil ausgebildet, welche über jeweils eine elektrische Steuerleitung 42, 48 an die Bremssteuereinheit 8 angeschlossen sind.

Nachfolgend werden der Aufbau und die Funktionsweise des ABS-Regelventils 4 anhand der vergrößerten Abbildung des ABS-Regelventils 4 in der Fig. 2 näher erläutert.

Das ABS-Regelventil 4 weist einen von dem Bremsdruckeingang 32 zum Einlassventil 38 führenden Eingangskanal 50, einen von dem Einlassventil 38 zum Bremsdruckausgang 34 führenden Ausgangskanal 52, einen von dem Ausgangskanal 52 abzweigenden, zum Auslassventil 44 führenden Seitenkanal 54 sowie eine von dem Auslassventil 44 zu dem Entlüftungsausgang 36 führende Austrittskammer 56 auf. Über das Einlassventil 38 ist der Ausgangskanal 52 abhängig von der Schaltstellung des Einlassventils 38 wechselweise mit dem Eingangskanal 50 verbindbar oder gegenüber diesem absperrbar. Über das Auslassventil 44 ist der Seitenkanal 54 abhängig von der Schaltstellung des Auslassventils 44 wechselweise mit der Austrittskammer 56 verbindbar oder gegenüber dieser absperrbar.

Das Einlassventil 38 ist als ein Membranventil ausgebildet und umfasst einen Ventilsitz 58, eine Membrane 60, eine Ventilfeder 62 und eine erste Steuerkammer 64. Bei drucklosem Bremsdruckeingang 32 wird die Membrane 60 von der Ventilfeder 62 gegen den Ventilsitz 58 gedrückt, wodurch das Einlassventil 38 wie in Fig. 2 abgebildet geschlossen ist. Über das zugeordnete erste Vorsteuerventil 40 ist die erste Steuerkammer 64 des Einlassventils 38 wechselweise mit dem am Entlüftungsausgang 36 anliegenden Umgebungsdruck p_{U} oder mit dem am Bremssteuereingang 32 anliegenden Eingangsbremsdruck p_{B_E} beaufschlagbar. Hierzu ist ein zu der Steuerkammer 64 des Einlassventils 38 führender Steuerkanal 66, 66a bei abgeschaltetem, also unbestromtem ersten Vorsteuerventil 40 über einen Ausgangs-Steuerkanal 68, 68a mit der Austrittskammer 56 verbunden. Dies führt bei druckführendem Bremsdruckeingang 32 zu einem geöffneten Einlassventil 38. Dagegen wird der Steuerkanal 66, 66a bei eingeschaltetem, also bestromtem ersten Vorsteuerventil 40 über einen Eingangs-Steuerkanal 70, 70a mit dem Eingangskanal 50 verbunden, welches zum Schließen des Einlassventils 38 mittels der Ventilfeder 62 führt.

Das Auslassventil 44 ist ebenfalls als ein Membranventil ausgebildet und umfasst einen Ventilsitz 72, eine Membrane 74, eine Ventilfeder 76 und eine zweite Steuerkammer 78. Bei drucklosem Bremsdruckeingang 32 und drucklosem Bremsdruckausgang 34 wird die Membrane 74 von der Ventilfeder 76 gegen den Ventilsitz 72 gedrückt, wodurch das Auslassventil 44 wie in Fig. 2 abgebildet geschlossen ist. Über das zugeordnete zweite Vorsteuerventil 46 ist die Steuerkammer 78 des Auslassventils 44 wechselweise mit dem am Bremssteuereingang 32 anliegenden Eingangsbremsdruck p_{B_E} oder mit dem am Entlüftungsausgang 36 anliegenden Umgebungsdruck p_{U} beaufschlagbar. Hierzu ist ein zu der Steuerkammer 78 des Auslassventils 44 führender Steuerkanal 80 bei abgeschaltetem, also unbestromtem zweite Vorsteuerventil 46 über den Eingangs-Steuerkanal 70, 70b mit dem Eingangskanal 50 verbunden, welches bei druckführendem Bremsdruckeingang 32 zu einem geschlossenen Auslassventil 44 führt. Dagegen wird der Steuerkanal 80 bei eingeschaltetem, also bestromtem zweiten Vorsteuerventil 46 über den Ausgangs-Steuerkanal 68 mit der Austrittskammer 56 verbunden, welches zum Öffnen des Auslassventils 44 führt.

Bei unbestromten Vorsteuerventilen 40, 46 ist somit das Einlassventil 38 geöffnet und das Auslassventil 44 geschlossen, welches der Schaltfunktion "Bremsdruck erhöhen" des ABS-Regelventils 4 entspricht. Bei bestromtem ersten Vorsteuerventil 40 und unbestromtem zweiten Vorsteuerventil 46 sind das Einlassventil 38 und das Auslassventil 44 geschlossen, was der Schaltfunktion "Bremsdruck halten" des ABS-Regelventils 4 entspricht. Bei bestromten Vorsteuerventilen 40, 46 ist das Einlassventil 38 geschlossen und das Auslassventil 44 geöffnet, was der Schaltfunktion "Bremsdruck absenken" des ABS-Regelventils 4 entspricht.

Bei einem derartigen ABS-Regelventil 4 können Schmutzpartikel und Feuchtigkeit mit der über den Bremsdruckeingang 32 einströmenden Druckluft in den Eingangskanal 50 eingetragen werden, welches durch Korrosionserscheinungen zur Verstopfung des Eingangs-Steuerkanals 70, 70a, 70b führen kann. Insbesondere bei einer Anordnung in oder an einem Radhaus einer Fahrzeugachse ist ein ABS-Regelventil 4 stark äußeren Einflüssen, wie aufgewirbeltem Schmutz und Spritzwasser, ausgesetzt. Daher besteht vor allem bei beschädigter oder versprödeter, also nicht mehr federelastischer Membrandichtung 82 am Entlüftungsausgang 36 die Gefahr, dass Schmutzpartikel und Feuchtigkeit von außen in die Austrittskammer 80 eindringen, welches insbesondere durch Korrosionserscheinungen zur Verstopfung des Ausgangs-Steuerkanals 68, 68a führen kann. Bei verstopften Eingangs-Steuerkanälen 68, 68a und/oder Ausgangs-Steuerkanälen 70, 70a, 70b ist die Schaltfunktionsfähigkeit des Einlassventils 38 und/oder des Auslassventils 44 nicht mehr gegeben oder zumindest stark eingeschränkt.

Daher sieht das erfindungsgemäße Verfahren zur Funktionsüberprüfung eines ABS-Regelventils 4 vor, die pneumatische Schaltfunktionsfähigkeit des ABS-Regelventils 4 mit der Durchführung einer Testfunktion zu überprüfen. Allgemein ist hierzu vorgesehen, dass über das Achsmodulatorventil 2 ein Bremsdruck p_{B_E} in die Radbremsleitung 30, 30a eingesteuert wird, dass nachfolgend der zeitliche Bremsdruckverlauf p_{B_E}(t) im eingangsseitigen Abschnitt 30a der Radbremsleitung 30 mittels des in dem Achsmodulatorventil 2 angeordneten Drucksensors 26 gemessen und elektronisch abgespeichert wird, dass durch Einschalten oder Abschalten mindestens eines der beiden Vorsteuerventile 40, 46 des ABS-Regelventils 4 während der Erfassung des Bremsdruckverlaufes p_{B_E}(t) mindestens eine Umschaltung des Einlassventils 38 oder des Auslassventils 44 veranlasst wird, und dass abschließend anhand des zeitlichen Bremsdruckverlaufes p_{B_E}(t) beurteilt wird, ob der Eingangs-Steuerkanal 70, 70a, 70b oder der Ausgangs-Steuerkanal 68, 68a der beiden Vorsteuerventile 40, 46 offen oder verschlossen ist.

Konkret ist in einer bevorzugten Ausführungsform des Verfahrens vorgesehen, dass nach dem Einsteuern des Bremsdruckes p_{B_E} in die Radbremsleitung 30, 30a in einem ersten Teil der Testfunktion das Einlassventil 38 durch Einschalten des zugeordneten ersten Vorsteuerventils 40 geschlossen wird, und dass der Eingangs-Steuerkanal 70, 70a, 70b als offen beurteilt wird, wenn der Bremsdruck p_{B_E} anschließend zumindest weitgehend konstant gehalten wurde, und dass der Eingangs-Steuerkanal 70, 70a, 70b als verschlossen beurteilt wird, wenn der Bremsdruck p_{B_E} abgesunken ist. Bei verschlossenem Eingangs-Steuerkanal 70, 70a, 70b gelangt nämlich der eingesteuerte Bremsdruck p_{B_E} nicht oder nur stark verzögert und gedrosselt in die beiden Steuerkammern 64, 78 des Einlassventils 38 und des Auslassventils 44**,** sodass das Einlassventil 38 geöffnet bleibt und das Auslassventil 44 geöffnet wird, welches zum Absinken des Bremsdruckes p_{B_E} in der Radbremsleitung 30, 30a, 30b führt.

Wenn im ersten Teil der Testfunktion ein offener Eingangs-Steuerkanal 70, 70a, 70b festgestellt wurde, wird unmittelbar danach ein zweiter Teil der Testfunktion ausgeführt. Dieser zweite Teil der Testfunktion sieht vor, dass das Auslassventil 44 durch kurzzeitiges Einschalten des zugeordneten zweiten Vorsteuerventils 46 impulsartig geöffnet wird, dass daraufhin das Einlassventil 38 durch kurzzeitiges Abschalten des zugeordneten ersten Vorsteuerventils 40 impulsartig geöffnet wird, und dass der Ausgangs-Steuerkanal 68, 68a als offen beurteilt wird, wenn der Bremsdruck p_{B_E} abgesunken ist, sowie als verschlossen beurteilt wird, wenn der Bremsdruck p_{B_E} gehalten wurde.

Bei verschlossenem Ausgangs-Steuerkanal 68, 68a gelangt der Umgebungsdruck p_{U} während der Öffnungsimpulse nicht oder nur stark verzögert in die Steuerkammer 64 des Einlassventils 38 und in die Steuerkammer 78 des Auslassventils 44, sodass beide Ventile 38, 44 geschlossen bleiben, welches zum Konstanthalten des Bremsdruckes p_{B_E} im eingangsseitigen Abschnitt 30a der Radbremsleitung 30 führt.

### Bezugszeichenliste (Teil der Beschreibung)

- 1: Elektropneumatische Bremsanlage
- 2: Achsmodulatorventil
- 4: ABS-Regelventil
- 6: Radbremszylinder
- 8: Elektronische Bremssteuereinheit
- 10: Vorratsdruckeingang
- 12: Bremssteuereingang
- 14: Bremsdruckausgang
- 16: Entlüftungsausgang
- 18: Vorratsleitung
- 20: Bremssteuerleitung
- 22: Steuerleitung
- 24: Steuerleitung
- 26: Drucksensor
- 28: Sensorleitung
- 30: Radbremsleitung
- 30a: Radbremsleitung, eingangsseitiger Abschnitt
- 30b: Radbremsleitung, ausgangsseitiger Abschnitt
- 32: Bremsdruckeingang
- 34: Bremsdruckausgang
- 36: Entlüftungsausgang
- 38: Einlassventil, Membranventil
- 40: Erstes Vorsteuerventil, 3/2-Wege-Magnetventil
- 42: Steuerleitung
- 44: Auslassventil, Membranventil
- 46: Zweites Vorsteuerventil, 3/2-Wege-Magnetventil
- 48: Steuerleitung
- 50: Eingangskanal
- 52: Ausgangskanal
- 54: Seitenkanal
- 56: Austrittskammer
- 58: Ventilsitz des Einlassventils
- 60: Membrane des Einlassventils
- 62: Ventilfeder des Einlassventils
- 64: Erste Steuerkammer
- 66, 66a: Steuerkanal
- 68, 68a: Ausgangs-Steuerkanal
- 70, 70a, 70b: Eingangs-Steuerkanal
- 72: Ventilsitz des Auslassventils
- 74: Membrane des Auslassventils
- 76: Ventilfeder des Auslassventils
- 78: Zweite Steuerkammer
- 80: Steuerkanal
- 82: Membrandichtung
- ABS: Antiblockiersystem
- p_{B_A}: Bremsdruck, Ausgangsbremsdruck
- p_{B_E}: Bremsdruck, Eingangsbremsdruck
- p_{B_S}: Bremssteuerdruck
- pu: Umgebungsdruck
- pv: Vorratsdruck
- t: Zeit
- v_{F}: Fahrgeschwindigkeit

## Patentansprüche

1. Verfahren zur Funktionsüberprüfung eines ABS-Regelventils (4),
welches einen Bremsdruckeingang (32), einen Bremsdruckausgang (34), einen Entlüftungsausgang (36), ein druckgesteuertes Einlassventil (38) und ein druckgesteuertes Auslassventil (44) aufweist,
wobei dem Einlassventil (38) und dem Auslassventil (44) jeweils ein 3/2-Wege-Magnetventil als Vorsteuerventil (40, 46) zugeordnet ist,
mittels deren Bestromung das Einlassventil (38) geschlossen und das Auslassventil (44) geöffnet werden kann,
wobei das ABS-Regelventil (4) in einer Radbremsleitung (30) einer elektropneumatischen Bremsanlage (1) eines Fahrzeugs zwischen einem Achsmodulatorventil (2) und mindestens einem Radbremszylinder (6) angeordnet ist,
und bei dem mittels einer Testfunktion die pneumatische Schaltfunktionsfähigkeit des ABS-Regelventils (4) überprüft wird,
**dadurch gekennzeichnet,**
**dass** mittels des Achsmodulatorventils (2) ein Bremsdruck (p_{B_E}) in die Radbremsleitung (30, 30a) eingesteuert wird,
**dass** nachfolgend der zeitliche Bremsdruckverlauf (p_{B_E}(t)) in einem eingangsseitigen Abschnitt (30a) der Radbremsleitung (30) mittels eines Drucksensors (26) gemessen sowie in einer elektronischen Bremssteuereinheit (8) abgespeichert wird,
**dass** durch Einschalten oder Abschalten mindestens eines der Vorsteuerventile (40, 46) des ABS-Regelventils (4) während der Messung des Bremsdruckverlaufes (p_{B_E}(t)) mindestens eine Umschaltung des Einlassventils (38) oder des Auslassventils (44) veranlasst wird,
und **dass** abschließend anhand des Bremsdruckverlaufes (p_{B_E}(t)) beurteilt wird, ob ein Eingangs-Steuerkanal (70, 70a, 70b) oder ein Ausgangs-Steuerkanal (68, 68a),
welche die beiden Vorsteuerventile (40, 46) miteinander verbinden, offen oder verschlossen ist.

2. Verfahren nach Anspruch 1, **dadurch gekennzeichnet,**
**dass** nach dem Einsteuern des Bremsdruckes (p_{B_E}) in die Radbremsleitung (30, 30a) in einem ersten Teil der Testfunktion das Einlassventil (38) durch Einschalten des zugeordneten ersten Vorsteuerventils (40) geschlossen wird,
und **dass** der Eingangs-Steuerkanal (70, 70a, 70b) als offen beurteilt wird, wenn der Bremsdruck (p_{B_E}) konstant geblieben ist,
sowie als verschlossen beurteilt wird, wenn der Bremsdruck (p_{B_E}) abgesunken ist.

3. Verfahren nach Anspruch 2, **dadurch gekennzeichnet,**
**dass** dann, wenn im ersten Teil der Testfunktion ein offener Eingangs-Steuerkanal (70, 70a, 70b) festgestellt wurde,
unmittelbar danach ein zweiter Teil der Testfunktion ausgeführt wird, welcher vorsieht, dass das Auslassventil (44) durch kurzzeitiges Einschalten des zugeordneten zweiten Vorsteuerventils (46) impulsartig geöffnet wird,
**dass** daraufhin das Einlassventil (38) durch kurzzeitiges Abschalten des zugeordneten ersten Vorsteuerventils (40) impulsartig geöffnet wird,
und **dass** der Ausgangs-Steuerkanal (68, 68a) als offen beurteilt wird,
wenn der Bremsdruck (p_{B_E}) abgesunken ist, und als verschlossen beurteilt wird, wenn der Bremsdruck (p_{B_E}) konstant gehalten wurde.

4. Verfahren nach einem der Ansprüche 1 bis 3, **dadurch gekennzeichnet,**
**dass** die Testfunktion bei mehreren über jeweils eine Radbremsleitung (30) an das Achsmodulatorventil (2) angeschlossenen ABS-Regelventilen (4) in einer festgelegten Reihenfolge für jedes der ABS-Regelventile (4) separat ausgeführt wird.

5. Verfahren nach einem der Ansprüche 1 bis 4, **dadurch gekennzeichnet,**
**dass** vor der Durchführung der Testfunktion der aktuelle Betriebszustand des Fahrzeugs ermittelt wird,
und **dass** die Testfunktion nur dann ausgeführt wird, wenn sich das Fahrzeug in einem für die Fahrsicherheit ungefährlichen Betriebszustand befindet.

6. Verfahren nach Anspruch 5, **dadurch gekennzeichnet,**
**dass** vor der Durchführung der Testfunktion die aktuelle Fahrgeschwindigkeit (v_{F}) und der aktuelle Betriebszustand der Parkbremse sensorisch ermittelt werden,
und **dass** die Testfunktion nur dann ausgeführt wird, wenn das Fahrzeug stillsteht (v_{F} = 0) und die Parkbremse betätigt ist.

7. Verfahren nach einem der Ansprüche 1 bis 6, **dadurch gekennzeichnet,**
**dass** vor der Ausführung der Testfunktion der aktuelle Betriebszustand der Betriebsbremsanlage (1) sensorisch ermittelt wird,
und **dass** die Testfunktion nur dann ausgeführt wird, wenn die Betriebsbremsanlage (1) unbetätigt ist.

8. Verfahren nach einem der Ansprüche 1 bis 7, **dadurch gekennzeichnet, dass** die Testfunktion bei jeder Inbetriebnahme des Fahrzeugs ausgeführt wird.

9. Verfahren nach einem der Ansprüche 1 bis 8, **dadurch gekennzeichnet,**
**dass** die Testfunktion bei jeder Fahrtunterbrechung ausgeführt wird, welche nach Ablauf einer vorab festgelegten Fahrstrecke oder Fahrzeit des Fahrzeugs seit der letzten Ausführung der Testfunktion eintritt.

10. Verfahren nach einem der Ansprüche 1 bis 9, **dadurch gekennzeichnet,**
**dass** nach der Ausführung der Testfunktion ein akustisches und/oder optisches Signal im Bereich des Fahrerplatzes ausgegeben wird, mit dem das Ende der Testfunktion angezeigt wird,
und **dass** das Ergebnis der Testfunktion in einem Display eines Infotainmentsystems angezeigt wird.

11. Verfahren nach einem der Ansprüche 1 bis 10, **dadurch gekennzeichnet,**
**dass** ein akustisches und/oder optisches Warnsignal im Bereich des Fahrerplatzes ausgegeben wird, wenn im ersten Teil der Testfunktion ein verschlossener Eingangs-Steuerkanal (70, 70a, 70b) oder im zweiten Teil der Testfunktion ein verschlossener Ausgangs-Steuerkanal (68, 68a) festgestellt wurde.

12. Verfahren nach einem der Ansprüche 1 bis 11, **dadurch gekennzeichnet,**
**dass** im Fehlerspeicher einer Bremssteuereinheit (8) eine Fehlermeldung abgespeichert und im Display des Infotainmentsystems eine Aufforderung zum Anfahren einer Werkstatt angezeigt wird,
wenn im ersten Teil der Testfunktion ein verschlossener Eingangs-Steuerkanal oder im zweiten Teil der Testfunktion ein verschlossener Ausgangs-Steuerkanal festgestellt wurde.

## Claims

1. Method for functional testing of an ABS control valve (4),
which has a brake pressure inlet (32), a brake pressure outlet (34), a vent outlet (36), a pressure-controlled intake valve (38) and a pressure-controlled exhaust valve (44),
in each case a 3/2-way solenoid valve being assigned as a pilot control valve (40, 46) to the intake valve (38) and the exhaust valve (44),
by energizing said solenoid valves, the intake valve (38) can be closed and the exhaust valve (44) can be opened,
the ABS control valve (4) being arranged in a wheel brake line (30) of an electropneumatic brake system (1) of a vehicle between an axle modulator valve (2) and at least one wheel brake cylinder (6),
and in which the pneumatic switching functionality of the ABS control valve (4) is checked by means of a test function,
**characterized**
**in that** by means of the axle modulator valve (2) a brake pressure (p_{B_E}) is introduced into the wheel brake line (30, 30a),
**in that** subsequently, the brake pressure curve over time (p_{B_E}(t)) in an inlet section (30a) of the wheel brake line (30) is measured by means of a pressure sensor (26) and stored in an electronic brake control unit (8),
**in that** by switching on or off at least one of the pilot control valves (40, 46) of the ABS control valve (4) during the measurement of the brake pressure curve (p_{B_E}(t)) at least one switching of the intake valve (38) or the exhaust valve (44) is initiated,
**and in that** finally, on the basis of the brake pressure curve (p_{B_E}(t)), it is assessed whether an input control channel (70, 70a, 70b) or an output control channel (68, 68a),
which connect the two pilot control valves (40, 46) to each other, is open or closed.

2. Method according to claim 1, **characterized**
**in that** after the brake pressure (p_{B_E}) is introduced into the wheel brake line (30, 30a) in a first part of the test function the intake valve (38) is closed by switching on the associated first pilot control valve (40),
**and in that** the input control channel (70, 70a, 70b) is assessed as being open when the brake pressure (p_{B_E}) has remained constant,
and is assessed as being closed when the brake pressure (p_{B_E}) has dropped.

3. Method according to claim 2, **characterized**
**in that** then, if an open input control channel (70, 70a, 70b) was detected in the first part of the test function,
immediately afterward, a second part of the test function is executed, which provides that the exhaust valve (44) is opened in a pulse by briefly switching on the associated second pilot control valve (46),
**in that** whereupon the intake valve (38) is opened in a pulse by briefly switching off the associated first pilot control valve (40),
**and in that** the output control channel (68, 68a) is assessed as being open,
when the brake pressure (p_{B_E}) has dropped, and is assessed as being closed when the brake pressure (p_{B_E}) was kept constant.

4. Method according to any of claims 1 to 3, **characterized**
**in that** the test function is executed separately for each of the ABS control valves (4) in a defined sequence for a plurality of ABS control valves (4) each connected to the axle modulator valve (2) via a wheel brake line (30).

5. Method according to any of claims 1 to 4, **characterized**
**in that** before the test function is performed, the current operating state of the vehicle is determined,
**and in that** the test function is only executed when the vehicle is in an operating state that is safe for driving safety.

6. Method according to claim 5, **characterized**
**in that** before the test function is performed, the current driving speed (v_{F}) and the current operating state of the parking brake are determined by sensors,
**and in that** the test function is only executed when the vehicle is stationary (v_{F} = 0) and the parking brake is engaged.

7. Method according to any of claims 1 to 6, **characterized**
**in that** before the test function is executed, the current operating state of the service brake system (1) is determined by sensors,
**and in that** the test function is only executed when the service brake system (1) is not actuated.

8. Method according to any of claims 1 to 7, **characterized in that** the test function is executed every time the vehicle is started up.

9. Method according to any of claims 1 to 8, **characterized**
**in that** the test function is executed every time the journey is interrupted, which occurs after a predetermined distance or driving time of the vehicle since the last execution of the test function.

10. Method according to any of claims 1 to 9, **characterized**
**in that** after the test function has been executed, an acoustic and/or visual signal is issued in the region of the driver's seat to indicate the end of the test function,
**and in that** the result of the test function is displayed on a screen of an infotainment system.

11. Method according to any of claims 1 to 10, **characterized**
**in that** an acoustic and/or visual warning signal is issued in the region of the driver's seat if a closed input control channel (70, 70a, 70b) was detected in the first part of the test function or a closed output control channel (68, 68a) was detected in the second part of the test function.

12. Method according to any of claims 1 to 11, **characterized**
**in that** an error message is stored in the fault memory of a brake control unit (8) and a request to visit a workshop is displayed on the screen of the infotainment system,
if a closed input control channel was detected in the first part of the test function or a closed output control channel was detected in the second part of the test function.

## Revendications

1. Procédé permettant le contrôle de fonction d'une soupape de régulation ABS (4),
laquelle présente une entrée de pression de freinage (32), une sortie de pression de freinage (34), une sortie d'évacuation d'air (36), une soupape d'admission (38) commandée par pression et une soupape d'échappement (44) commandée par pression,
dans lequel respectivement une soupape électromagnétique à 3/2 voies est associée, en tant que soupape pilote (40, 46), à la soupape d'admission (38) et à la soupape d'échappement (44),
au moyen de l'alimentation électrique desquelles la soupape d'admission (38) peut être fermée et la soupape d'échappement (44) ouverte,
dans lequel la soupape de régulation ABS (4) est disposée dans une conduite de frein de roue (30) d'un système de freinage électropneumatique (1) d'un véhicule entre une soupape de modulateur d'essieu (2) et au moins un cylindre de frein de roue (6)
et dans lequel, au moyen d'une fonction de test, la capacité de fonction de commutation pneumatique de la soupape de régulation ABS (4) est vérifiée,
caractérisé en ce
**qu**'une pression de freinage (p_{B_E}) est commandée dans la conduite de frein de roue (30, 30a) au moyen de la soupape de modulateur d'essieu (2),
**que** l'évolution de pression de freinage (p_{B_E}(t)) temporelle est ensuite mesurée dans une section côté entrée (30a) de la conduite de frein de roue (30) au moyen d'un capteur de pression (26) et est mémorisée dans une unité de commande de freinage électronique (8),
**que,** par la mise en circuit ou la mise hors circuit d'au moins l'une des soupapes pilotes (40, 46) de la soupape de régulation ABS (4) pendant la mesure de l'évolution de pression de freinage (p_{B_E}(t)), au moins une commutation de la soupape d'admission (38) ou de la soupape d'échappement (44) est provoquée,
**et qu**'enfin, à l'aide de l'évolution de pression de freinage (p_{B_E}(t)), on évalue si un canal de commande d'entrée (70, 70a, 70b) ou un canal de commande de sortie (68, 68a),
lesquels relient les deux soupapes pilotes (40, 46), est ouvert ou fermé.

2. Procédé selon la revendication 1, **caractérisé en ce**
**qu**'après la commande de la pression de freinage (p_{B_E}) dans la conduite de frein de roue (30, 30a), dans une première partie de la fonction de test, la soupape d'admission (38) est fermée par la mise en circuit de la première soupape pilote (40) associée,
**et que** le canal de commande d'entrée (70, 70a, 70b) est évalué comme ouvert lorsque la pression de freinage (p_{B_E}) est restée constante,
et comme fermé lorsque la pression de freinage (p_{B_E}) a diminué.

3. Procédé selon la revendication 2, **caractérisé en ce**
**que,** lorsqu'un canal de commande d'entrée (70, 70a, 70b) ouvert a été constaté dans la première partie de la fonction de test,
immédiatement après, une seconde partie de la fonction de test est exécutée, laquelle prévoit que la soupape d'échappement (44) est ouverte par impulsions par une mise en circuit momentanée de la seconde soupape pilote (46) associée,
**qu**'ensuite, la soupape d'admission (38) est ouverte par impulsions par une mise hors circuit momentanée de la première soupape pilote (40) associée,
**et que** le canal de commande de sortie (68, 68a) est évalué comme ouvert
lorsque la pression de freinage (p_{B_E}) a diminué et est évalué comme fermé lorsque la pression de freinage (p_{B_E}) a été maintenue constante.

4. Procédé selon l'une des revendications 1 à 3, **caractérisé en ce**
**que,** lorsque plusieurs soupapes de régulation ABS (4) sont raccordées à la soupape de modulateur d'essieu (2) par l'intermédiaire de respectivement une conduite de frein de roue (30), la fonction de test est exécutée séparément dans un ordre défini pour chacune des soupapes de régulation ABS (4).

5. Procédé selon l'une des revendications 1 à 4, **caractérisé en ce**
**que** l'état de fonctionnement actuel du véhicule est déterminé avant l'exécution de la fonction de test,
**et que** la fonction de test est exécutée uniquement lorsque le véhicule se trouve dans un état de fonctionnement ne présentant aucun risque pour la sécurité de conduite.

6. Procédé selon la revendication 5, **caractérisé en ce**
**que,** avant l'exécution de la fonction de test, la vitesse de conduite actuelle (v_{F}) et l'état de fonctionnement actuel du frein de stationnement sont déterminés par capteur,
**et que** la fonction de test est exécutée uniquement lorsque le véhicule est à l'arrêt (v_{F} = 0) et que le frein de stationnement est actionné.

7. Procédé selon l'une des revendications 1 à 6, **caractérisé en ce**
**que,** avant l'exécution de la fonction de test, l'état de fonctionnement actuel du système de frein de service (1) est déterminé par capteur,
**et que** la fonction de test est exécutée uniquement lorsque le système de frein de service (1) n'est pas actionné.

8. Procédé selon l'une des revendications 1 à 7, **caractérisé en ce que** la fonction de test est exécutée à chaque mise en fonctionnement du véhicule.

9. Procédé selon l'une des revendications 1 à 8, **caractérisé en ce**
**que** la fonction de test est exécutée à chaque interruption de trajet qui survient après le déroulé d'un itinéraire de conduite ou temps de conduite du véhicule défini au préalable depuis la dernière exécution de la fonction de test.

10. Procédé selon l'une des revendications 1 à 9, **caractérisé en ce**
**qu**'après l'exécution de la fonction de test, un signal acoustique et/ou optique est émis dans la zone du poste de conduite et au moyen duquel la fin de la fonction de test est indiquée,
**et que** le résultat de la fonction de test est affiché sur un écran d'affichage d'un système d'infodivertissement.

11. Procédé selon l'une des revendications 1 à 10, **caractérisé en ce**
**qu**'un signal d'avertissement acoustique et/ou optique est émis dans la zone du poste de conduite lorsqu'un canal de commande d'entrée (70, 70a, 70b) fermé a été constaté dans la première partie de la fonction de test ou lorsqu'un canal de commande de sortie (68, 68a) fermé a été constaté dans la seconde partie de la fonction de test.

12. Procédé selon l'une des revendications 1 à 11, **caractérisé en ce**
**qu**'un message d'erreur est mémorisé dans la mémoire d'erreurs d'une unité de commande de freinage (8) et une invitation à se rendre dans un garage est affichée sur l'écran d'affichage du système d'infodivertissement
lorsqu'un canal de commande d'entrée fermé a été constaté dans la première partie de la fonction de test ou lorsqu'un canal de commande de sortie fermé a été constaté dans la seconde partie de la fonction de test.
